# EUROPEAN PATENT APPLICATION

(11) **EP 4 203 470 A1**
(43) Date of publication of application: **28.06.2023**
(21) Application number: 21216187.1
(22) Date of filing: 21.12.2021
(51) Int. Cl.: H04N 17/04, H04N 21/2368, H04N 21/434, H04N 17/00, H04N 21/43, H04N 21/422, H04N 21/41, H04N 21/4223

(54) **SYSTEM AND METHOD FOR EVALUATION OF AUDIO-VIDEO DESYNCHRONIZATION**

(71) Applicant: Rohde & Schwarz GmbH & Co. KG, 81671 München (DE)
(72) Inventor: Berger, Jens, 4528 Zuchwil (CH)
(74) Representative: Rupp, Christian

(57) **Abstract**

A measuring system (1) is provided. The measuring system (1) comprises a first terminal (3), which in turn comprises a camera (30), and a sound signal input port (31). Moreover, the measuring system (1) comprises a transmission side device (2), which in turn comprises an acoustical element (22), configured to input a sound signal (200) into the sound signal input port (31) of the first terminal (3). The transmission side device (2) moreover comprises an optical element (20), which is configured to generate an optical signal (201) based on the sound signal (200) or based on a signal, the sound signal (200) is derived from, and input the resulting optical signal (201) into the camera (30).

## Description

The invention relates to a measuring system and a measuring method for determining if transmitted joint audio- and video-signals are synchronous.

In applications like video telephony, a synchronization between audio- and video-content is of high importance. In some transmission formats, like over the top, OTT, transmissions, audio and video may be transmitted through different data connections, even with different priorities, leading to an increased probability of desynchronization. Therefore, there is a need to measure the amount of desynchronization in transmissions.

In order to determine the synchronicity of audio- and video-signals, especially such signals transmitted through communication links, in the past, knowledge regarding the audio- and video-signal was necessary on the receiving side. This made measurements very complicated and also prevented one-sided measurements. Especially when using off-the-shelf components, such as mobile telephones, which are not simple to modify for measurement purposes, a high-measurement effort ensued.

For example the document GB2437122 A shows such a measuring method, in which knowledge of events on the video-track and knowledge of events on the audio-track is necessary in order to determine the synchronicity of the tracks.

Accordingly, the object of the invention is to provide a measuring system and measuring method, which require a reduced measuring complexity.

The object is solved by the features of the independent claims. Additional features of the invention are provided in the dependent claims.

According to a first aspect of the invention, a measuring system is provided. The measuring system comprises a first terminal, which in turn comprises a camera, and a sound signal input port. Moreover, the measuring system comprises a transmission side device, which in turn comprises an acoustical element, configured to input a sound signal into the sound signal input port of the first terminal. The transmission side device moreover comprises an optical element, which is configured to generate an optical signal based on the sound signal or based on a signal, the sound signal is derived from, and input the resulting optical signal into the camera. Since the optical signal contains information of the sound signal, or the signal, the sound signal is derived from, it is possible to determine the synchronicity of the two signals on a receiving side without having any further information regarding the signals. This significantly reduces the measuring complexity.

According to a first implementation form, the measuring system moreover comprises a second terminal, and a communication connection between the transmission side device and the second terminal. The transmission side device is moreover configured to transmit a first signal, recorded by the camera based on the optical signal to the second terminal, and to transmit a second signal, based on the sound signal, to the second terminal. Therefore, the second terminal receives the first signal and the second signal with an unknown time-delay there between. From the information in the first signal and the second signal, this time-delay can be determined.

According to a further implementation form, the second terminal moreover comprises a synchronicity analyser, which is configured to determine a synchronicity of the first signal and the second signal. Thereby, an automatic synchronisation measurement is possible.

Alternatively, the synchronicity analyser is not part of the second terminal, but merely connected to the second terminal. In this case it is possible to further reduce the necessary modifications to the second terminal.

According to a further implementation form, the synchronicity analyser is configured to determine the synchronicity of the first signal and the second signal based on the optical signal being generated based on the sound signal or based on the signal the sound signal is derived from. This allows for a very easy automatic synchronisation determination.

According to a further implementation form, the synchronicity analyser is configured to determine the synchronicity of the first signal and the second signal by determining events in the first signal, and determining events in the second signal, wherein each event in the first signal corresponds to an event in the second signal, and determining a time-delay between the events in the first signal and the corresponding events in the second signal. This allows for a very simple synchronisation determination.

According to a further implementation form, the transmission side device comprises a signal generator, which is configured to generate the sound signal and/or the optical signal or a signal, the optical signal is derived from. This allows for a very simple implementation of the transmission side device.

Alternatively, according to a further implementation form, the first terminal comprises an output port, especially a headphone output port. The first terminal is then configured to output the sound signal by the output port. The optical element is then configured to generate the optical signal based on the sound signal output by the output port. This prevents input delays on the two different paths of the sound signal and the optical signal.

According to a further alternative implementation form, the first terminal comprises a microphone connected to the sound signal input port. The microphone is then configured to record an acoustic signal resulting in the sound signal. This ensures an especially simple construction of the first terminal, since an off-the-shelf mobile phone can be used, even if it does not have an accessible electrical sound signal input port.

According to a further implementation form, the transmission side device comprises a further microphone, which is connected to the optical element, and which is configured to record the acoustic signal. The optical element is then configured to generate the optical signal based on the signal recorded by the further microphone. This combines the benefit of the previously described implementation form with an especially simple construction of the first terminal, due to the connection between the sound signal input port and the output port is no longer necessary.

According to a further implementation form, the measuring system is configured to determine the synchronicity of the first signal and the second signal based on the optical signal being generated based on the sound signal or based on the signal the sound signal is derived from, and the synchronicity analyser is moreover configured to determine the synchronicity of the first signal and the second signal based on the optical signal being generated based on the signal recorded by the further microphone, and to take a distance between the microphone and the further microphone into account when determining the synchronicity. This prevents errors due to additional time-delay.

According to a further implementation form, the transmission side device comprises an artificial head, comprising a loudspeaker. The loudspeaker is then configured to generate the acoustic signal. This allows for a very simple simulation of a real-world speaker, resulting in very accurate measuring results. Alternatively, the use of an actual human being generating the acoustic signal is possible.

According to a further implementation form, the first terminal is a mobile communication device, especially a cell phone or a tablet, or a laptop computer, or a desktop computer, or a video telephony device. Additionally or alternatively, the second terminal is a mobile communication device, especially a cell phone or a tablet or a laptop computer or a desktop computer, or a video telephony device. This ensures a very high degree of measurement flexibility.

According to a further implementation form, the optical element comprises an LED, an LED matrix or an OLED display. This allows for a high information density within the optical signal.

According to a further implementation form, the optical element is configured to encode a level or a level change of the sound signal or the signal the sound signal is derived from into a position information and/or colour information and/or brightness information and/or position changes and/or colour changes and/or brightness changes of the optical signal. This ensures a high information density of the optical signal, and therefore ensures a high synchronicity measuring accuracy.

According to a second aspect of the invention, a measuring method is provided. The method comprises inputting a sound signal into a sound input port of a first terminal, generating an optical signal based on the sound signal or based on a signal the sound signal is derived from, and inputting the optical signal into a camera of the first terminal. By sharing information between the sound signal and the optical signal, a synchronisation measurement is possible without requiring shared knowledge of the signals on the reception side and the transmission side.

This ensures a high measuring flexibility and low measuring effort.

An exemplary embodiment of the invention is now further explained with respect to the drawings, in which
- Fig. 1: shows a first embodiment of the inventive measuring system in a block diagram;
- Fig. 2: shows a second embodiment of the inventive measuring system in a block diagram;
- Fig. 3: shows a third embodiment of the inventive measuring system in a block diagram, and
- Fig. 4: shows a first embodiment of the inventive measuring method in a flow diagram.

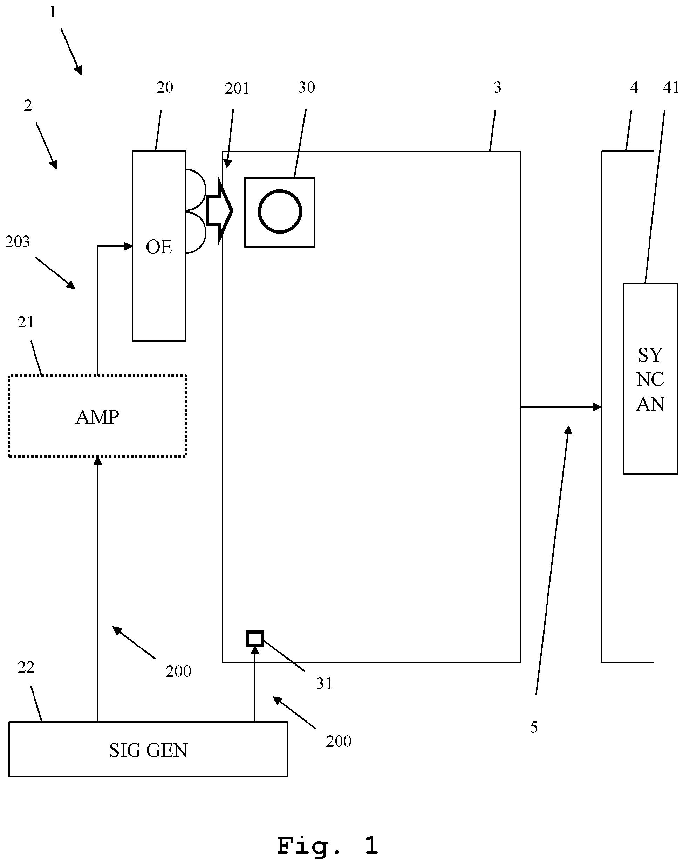

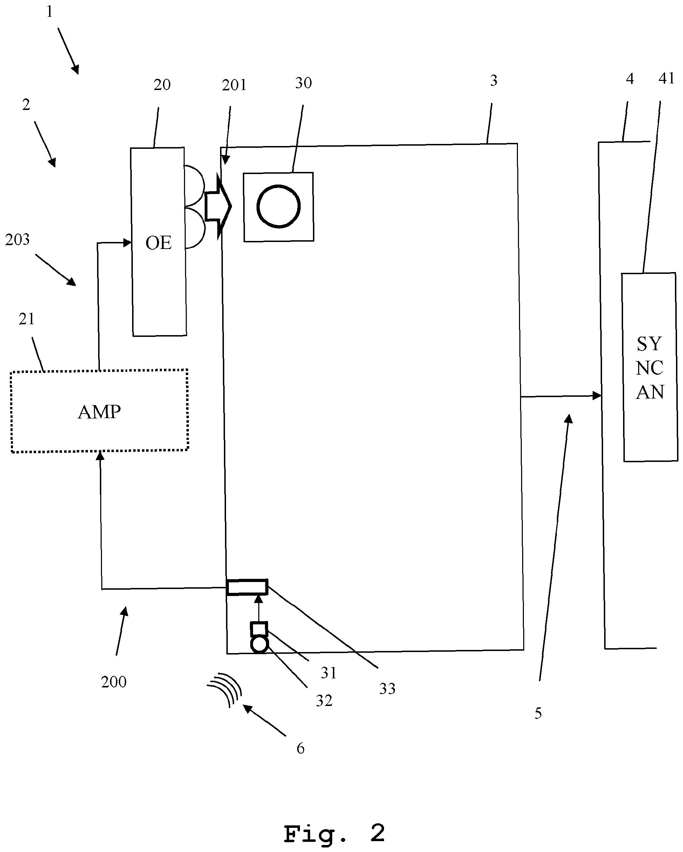

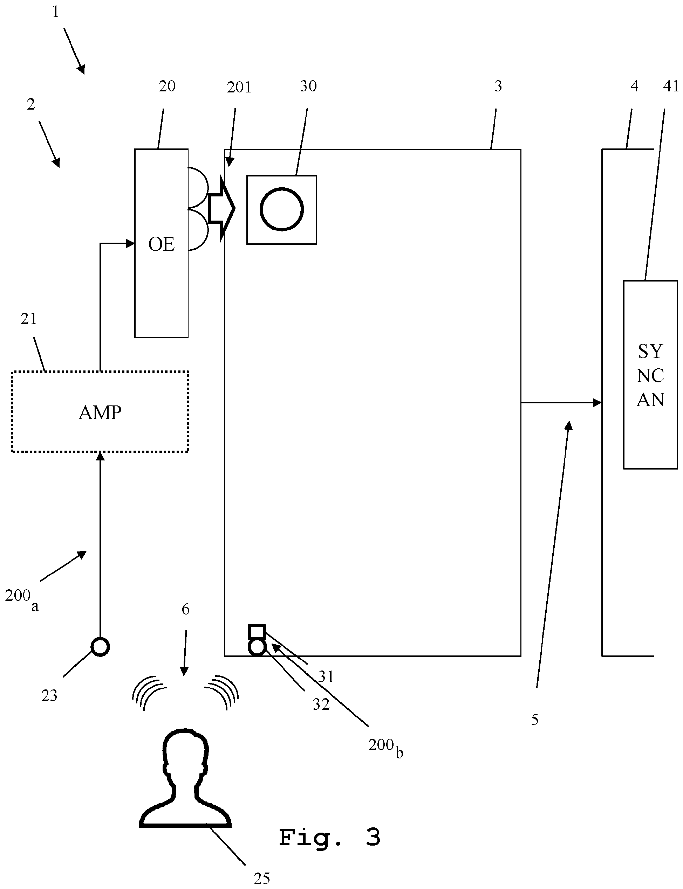

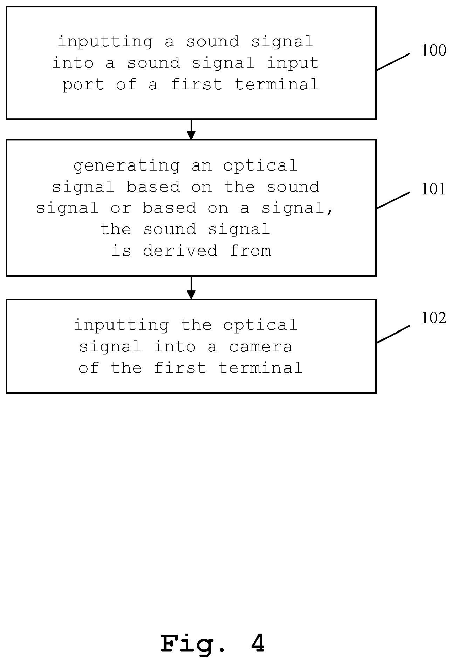

First, we demonstrate the general function of an embodiment of the inventive measuring system along Fig. 1. With regard to Fig. 2 and Fig. 3, different alternative constructions and functions are shown. Finally, along Fig. 4, the function of an embodiment of the inventive measuring method is shown. Similar entities and reference numbers in different figures have been partially omitted.

In Fig. 1, a first embodiment of the inventive measuring system 1 is shown. The measuring system 1 comprises a transmission side device 2 and a first terminal 3. The transmission side device 2 comprises an acoustical element, especially a signal generator 22, connected to an amplifier 21, which in turn is connected to an optical element 20. The first terminal 3 comprises a sound signal input port 31 and a camera 30. The measuring system 1 moreover comprises a second terminal 4.

The transmission side device 3 and the second terminal 4 are connected through a communication connection 5. The second terminal 4 moreover comprises a synchronicity analyser 41. Alternatively, the synchronicity analyser is not part of the second terminal, but is an external device.

The signal generator 22 is connected to the sound signal input port 31. Moreover, the optical element 20 is ranged so that it is in interaction with the camera 30.

In order to perform a synchronicity measurement, the signal generator 22 generates a sound signal 200 and provides it to the sound signal input port 31 as well as to the amplifier 21. Therein, the signal generator might be a sound card of a measuring computer. The sound signal 200 is received by the sound signal input port 31 of the first terminal 3.

The sound signal 200 is moreover provided to the amplifier 21 which amplifies the sound signal 200, resulting in an amplified sound signal 203, which is provided to the optical element 20. The optical element 20 is i.e. an LED, an LED matrix or an OLED display. The optical element 20 generates an optical signal 201 from the amplified sound signal 203. It is important to note that the amplifier 21 constitutes an optional component. In case the amplifier 21 is not present, the sound signal 200 is directly provided to the optical element 20. The optical element 20 then performs all necessary signal processing steps.

It is especially noteworthy that the optical element 20 generates the optical signal 201 based on the sound signal 200 or based on a signal the sound signal is derived from, in case of an acoustic signal being used as input.

The optical element 200 is configured to input the optical signal 201 into the camera 30 of the first terminal 3. The first terminal 3 then generates a first signal from the optical signal 201 and transmits it through the communication connection 5 to the second terminal 4. The first terminal 3 furthermore generates a second signal from the sound signal 200 received through the sound signal input port 31, and transmits it through the communication connection 5 to the second terminal 4.

The synchronicity analyser 41 then determines a synchronicity between the first signal and the second signal. Especially, this is done by determining events in the first signal, and determining corresponding events in the second signal, and a time-delay between events in the first signal and the corresponding events in the second signal.

Especially, the synchronicity analyser 41 may determine envelope curves of the first signal and the second signal and determine the synchronicity therefrom. Also the above-referenced events may be determined from these envelope curves.

If the synchronicity analyser 41 is part of the second terminal 4, the synchronicity analyser 41 can perform the analysis on the received data directly. If the synchronicity analyser 41 is not part of the second terminal 4, but an external device, it may capture the first signal from a screen of the second terminal 4 using a camera, and capture the second signal from a speaker using a microphone, or directly from a headphone jack of the second terminal 4, before performing the analysis.

In Fig. 2, a second embodiment of the inventive measuring system 1 is shown. Here, no signal generator is present. Instead, an acoustic signal 006 is used as the audio input signal. The first terminal 3 moreover comprises a microphone 32, which is connected to the audio signal input port 31. Moreover, the first terminal 3 comprises an output port 33, especially a headphone output port. Here, the sound signal input port 31 is connected to the output port 33. Therefore, the acoustic signal 6 is received by the microphone 32 and input as the sound signal 200 into the sound signal input port 31. The sound signal 200 is then transferred to the output port 33, which transfers it to the optional amplifier 21.

Apart from these differences, the construction is identical to the embodiment of Fig. 1.

In operation, the embodiment of Fig. 2 differs from the embodiment of Fig. 1 in that instead of a sound signal 200 being generated by the signal generator, and provided to the sound signal input port 31 as well as to the amplifier 21, the acoustic signal 6 is used as the input audio signal and input only through the microphone 32, the sound signal input port 31, and the output port 33. Especially if the first terminal 3 does not have an accessible sound signal input port, the embodiment shown here is very useful.

Moreover, in Fig. 3, a further alternative embodiment is shown. Here, the first terminal 3 does not comprise said output port 33 of Fig. 2. Instead, the transmission side device 2 comprises a further microphone 23. The same acoustic signal 6 is received simultaneously by the microphone 32 of the first terminal as well as by the further microphone 23 of the transmission side device 2. Both, the microphone 32 and the further microphone 23, generate an sound signal 200_{a,b} from the acoustic signal 6. The sound signal 200_{b} recorded by the microphone 32 is handed to the sound signal input port 31 and handled as previously described by the first terminal 3. The sound signal 200ₐ generated by the further microphone 23 is handed to the optional amplifier 21, and handled as previously described.

Due to the non-identical locations of the microphone 32 and the further microphone 23, a slight time-delay between the recorded signals 200ₐ, 200_{b} is possible. In this case, this additional time-delay has to be taken into account by the synchronicity analyser 41.

It should especially be noted that the acoustic signal 6 may be generated by an optional artificial head 25, so as to simulate a human speaker. Alternatively, a direct generation of the acoustic signal 6 by a human speaker is possible.

It should especially be noted that the first terminal 3 and the second terminal 4 may be any communication devices. The only importance is that the first terminal 3 comprises optical and acoustic input means. Especially, the terminals can be mobile communication devices, such as cell phones, or tablet computers, or laptop computers, or desktop computers, or video telephony devices.

Also, it is noteworthy that the optical element 20 can be or comprise a single LED and/or OLED, or can comprise a matrix of LEDs or OLEDs or even be a display. Also, the optical element 20 may be ready to generate the optical signals 201 with different colours and/or brightnesses and/or positions on the display. Information regarding the sound signal 200 can be encoded by using brightness, colour, position and corresponding changes thereof.

In Fig. 4, an embodiment of the inventive measuring method is shown. In a first step 100, a sound signal is input into a sound signal input port of a first terminal. In a second step 101, an optical signal is generated based on the sound signal or based on a signal the sound signal is derived from. In a third step 102, the optical signal is input into a camera of the first terminal.

It is important to note that all elements of the measuring system and measuring method are interchangeable. All features of the measuring system can especially be integrated into the embodiment of the measuring method as well.

The invention is not limited to the examples and especially not to specific types of terminal devices or communications connections. The characteristics of the exemplary embodiments can be used in any advantageous combination.

## Claims

1. Measuring system (1) comprising:
- a first terminal (3), comprising:
- a camera (30), and
- a sound signal input port (31),
- a transmission side device (2), comprising
- an acoustical element (22), configured to input a sound signal (200) into the sound signal input port (31),
- an optical element (20), configured to generate an optical signal (201) based on the sound signal (200) or based on a signal (6), the sound signal (200) is derived from, and input the optical signal (201) into the camera (30).

2. Measuring system (1) according to claim 1, comprising
- a second terminal (4), and
- a communication connection (5) between the first terminal (3) and the second terminal (4),
wherein the first terminal (3) is configured to
- transmit a first signal, recorded by the camera (30) based on the optical signal (201), to the second terminal (4), and
- transmit a second signal, based on the sound signal (200), to the second terminal (4).

3. Measuring system (1) according to claim 2,
wherein the second terminal (4) comprises a synchronicity analyser (41), configured to determine a synchronicity of the first signal and the second signal.

4. Measuring system (1) according to claim 3,
wherein the synchronicity analyser (41) is configured to determine the synchronicity of the first signal and the second signal based on the optical signal (201) being generated based on the sound signal (200) or based on the signal (6) the sound signal is derived from.

5. Measuring system (1) according to claim 3 or 4, wherein the synchronicity analyser (41) is configured to determine the synchronicity of the first signal and the second signal by
- determining events in the first signal,
- determining events in the second signal, wherein each event in the first signal corresponds to an event in the second signal, and
- determining a time delay between the events in the first signal and the corresponding events in the second signal.

6. Measuring system (1) according to any of the claims 1 to 5,
wherein the transmission side device (2) comprises a signal generator (22), configured to generate the sound signal (200) and the optical signal (201).

7. Measuring system (1) according to any of the claims 1 to 5,
wherein the first terminal (3) comprises an output port (33), especially a headphone output port,
wherein the first terminal (3) is configured to output the sound (200) signal by the output port (33), and
wherein optical element (20) is configured to generate the optical signal (201) based on the sound signal (200) output by the output port (33).

8. Measuring system (1) according to any of the claims 1 to 5,
wherein the first terminal (3) comprises a microphone (32), connected to the sound signal input port (31), and wherein the microphone (32) is configured to record an acoustic signal (6), resulting in the sound signal (200).

9. Measuring system (1) according to claim 8,
wherein the transmission side device (2) comprises a further microphone (23), connected to the optical element (20), configured to record the acoustic signal, and wherein the optical element (20) is configured to generate the optical signal (201) based on the signal (200ₐ) recorded by the further microphone (23).

10. Measuring system (1) according to claim 9,
wherein the measuring system (1) is a measuring system (1) according to claim 4,
wherein the synchronicity analyser (41) is configured to
- determine the synchronicity of the first signal and the second signal based on the optical signal (201) being generated based on the signal (200ₐ) recorded by the further microphone (23), and
- take a distance between the microphone (32) and the further microphone (23) into account when determining the synchronicity.

11. Measuring system (1) according to any of the claims 8 to 10,
wherein the transmission side device (2) comprises an artificial head (25), comprising a loudspeaker,
wherein the loudspeaker is configured to generate the acoustic signal (6).

12. Measuring system (1) according to any of the claims 1 to 11,
wherein the first terminal (3) is a mobile communication device, especially a cell phone or a tablet, or a laptop computer, or a desktop computer, or a video telephony device, and/or
wherein the second terminal (4) is a mobile communication device, especially a cell phone or a tablet, or a laptop computer, or a desktop computer, or a video telephony device.

13. Measuring system (1) according to any of the claims 1 to 12,
wherein the optical element (20) comprises an LED or an LED matrix or an OLED display.

14. Measuring system (1) according to any of the claims 1 to 13,
wherein the optical element (20) is configured to encode a level or a level change of the sound signal or the signal the sound signal is derived from into a position information and/or color information and/or brightness information and/or position changes and/or color changes and/or brightness changes of the optical signal (201).

15. Measuring method comprising:
- inputting (100) a sound signal into a sound signal input port of a first terminal,
- generating (101) an optical signal based on the sound signal or based on a signal the sound signal is derived from, and
- inputting (102) the optical signal into a camera of the first terminal.
